# EUROPEAN PATENT APPLICATION

(11) **EP 4 707 087 A1**
(43) Date of publication of application: **11.03.2026**
(21) Application number: 24198535.7
(22) Date of filing: 05.09.2024
(51) Int. Cl.: B60T 13/36, B60T 8/17, B60T 8/88, B60T 13/66, B60T 17/22, B60T 8/176

(54) **A DETECTION DEVICE AND A DETECTION METHOD FOR DETECTING A HOSE BURST OR BREAKAGE OF A BRAKE HOSE IN A PNEUMATIC BRAKE SYSTEM**

(71) Applicant: KB Intellectual Property GmbH & Co. KG, 82049 Pullach (DE)
(72) Inventor: Purwins, Claudia, 80809 München (DE); Balogh, Barnabas, 80809 München (DE); Juhasz, Alexandra, 80809 München (DE)

(57) **Abstract**

A detection device is disclosed for detecting a hose burst or breakage of a brake hose (1) in a pneumatic brake system, preferably in a brake system of a train, comprising: an ECU (7) comprising a brake controller, said detection device further comprising a pressure controller, control valves (5, 8, 9), and a brake pressure sensor (4), said pressure controller being configured to control said control valves for providing a brake pressure for operating a brake cylinder (2), said brake pressure sensor (4) being configured to detect the actual brake pressure lead to the brake cylinder (2), said brake controller being configured to receive the actual brake pressure, the demanded brake pressure, and the control valve outputs of the pressure controller, wherein the brake controller comprises an algorithm configured to determine a hose break.

## Description

The present application relates to a detection device and a detection method for detecting a hose burst or breakage or cut off of a brake hose in a pneumatic brake system of a train or the like.

At present, in train systems a hose burst of a brake hose is detected in a test mode by a reduction of a supply pressure while the compressors supplying the brake system with air pressure are not working.

The disadvantage of this method is that this method can only be performed during specific automatic brake tests which need a minimum performing time of more than 30 sec, which has to be adapted to a specific setup depending on the relay capacity, the piping infrastructure, etc.

Another possibility of a detection for detecting a hose burst or breakage of a brake hose in a pneumatic system of a train or the like is to detect a hose pressure by pressure sensors / switches or pressure control valves in comparison with a brake demand. This method has the advantage that it can detect the hose burst continuously during the regular train operation.

The disadvantage of this method however, is that due to the high power supply needed, e.g. for a relay valve, a hose burst mostly cannot be detected as the remaining measured pressure signal is quite high and depends also on choke sizes of the valves, of tolerances of the relay valve, of proof missing (detection probability is low, esp. if the switch is used since the threshold of such a switch is quite low, etc.). If e.g. the valve choke diameters are large enough, the supply air flows at a high rate to the brake cylinders. In this case a relative high remaining pressure may be present even if there is a breakage of the hose so that a breakage cannot be determined in a reliable manner.

A further method or system for checking pneumatic brakes in a train is e.g. disclosed in DE 103 37 815 A1, However, also in this system, the time for determining a failure of the brakes in a train takes very long and has to be conducted in a separate procedure.

As the breakage of a brake hose can cause significant brake force loss of the train and leads to highly increased air consumption, it would be advantageous to detect the damage of the brake pipe in time to be prepared to make the necessary measures in a very short time period as soon as possible.

Hence, it is an object of the invention to provide a detection device and a detection method for detecting a hose burst or breakage of a brake hose in a pneumatic brake system of a train or the like which can be reliably performed and provides the information about a brake hose burst as soon as possible, preferably during the continuous operation of the train by existing infrastructure.

This object is achieved by a detection device and a detection method for detecting a hose burst or breakage of a brake hose in a pneumatic brake system of a train or the like according to the independent claims.

Advantageous developments of the invention are claimed in the dependent claims.

A detection device for detecting a hose burst or breakage of a brake hose in a pneumatic brake system, preferably in a brake system of a train, is disclosed, comprising: an ECU comprising a brake controller configured to monitor an actual brake pressure and to determine a demanded brake pressure, and a brake controller configured to monitor an actual brake pressure, and to determine a demanded brake pressure, a brake pressure controller configured to control valves of a brake system for providing a brake pressure for operating a brake cylinder, control valves, a brake pressure sensor configured to provide the actual brake pressure lead to the brake cylinder, said brake controller being configured to receive the actual brake, the demanded brake pressure, and the control valve outputs of the pressure controller, wherein the brake controller comprises an algorithm configured to determine a hose break.

By this structure, it is possible to use existing brake systems incorporating them in the detection device according to the invention and realizing the detection of a hose burst by an algorithm as said above.

Preferably, the control valve is a relay valve.

The brake pressure sensor is preferably configured to monitor the actual pressure after the control valves. Thereby, the actual pressure can be determined and used as an actual value to be delivered to the brake controller or the ECU where the algorithm can take this value into account.

The control valves are preferably also provided for wheel slide protection (WSP). Here, it can be an advantage, if the pressure control valves and WSP valves are the same, because in this case, there is always a pressure sensor built in after the valves to measure the actual cylinder pressure. If the pressure control comes from the relay valve and after it there is a WSP valve, it should be ensured that a cylinder pressure sensor is built in after the WSP valves.

The detection device preferably comprises an internal pneumatic model, wherein the hose burst detection is based on said internal pneumatic model which is configured to calculate the expected pressure of a healthy pneumatic system.

Preferably, the pneumatic model has stored all required data for being able to calculate the expected pressure of a healthy pneumatic system for various operating conditions.

The internal pneumatic model may preferably be further configured to receive the control valve commands and calculates the expected cylinder pressure change of a healthy system.

In case of a hose break of a specific hose connected with a specific brake cylinder where the cylinder pressure of said brake cylinder starts to drop significantly, and the pressure controller tries to maintain the requested pressure but needs enormous activation of the control valves and the brake pressure cannot be maintained stable at the requested level, there will be a significant difference between the expected (modelled) pressure and the measured cylinder pressure, which can be signalled as a fault.

Preferably, the device conducting the signalling may be the ECU of the brake equipment. The hose brake detection algorithm can run on the ECU (practically a part of the pressure control software). So the algorithm can easily receive all the necessary signals (valve control, pressure) and provide the output.

This can advantageously be conducted during the regular operation of a train and no separate measure is necessary.

Further, a method is disclosed for detecting a hose burst or breakage of a brake hose in a pneumatic brake system, preferably in a brake system of a train, is disclosed comprising the following steps:
Monitoring an actual brake pressure by a brake controller,
Controlling valve control outputs by a pressure controller,
providing the actual brake pressure by brake pressure sensors,
receiving the actual pressure after said control valves, the demanded pressure, and the valve control outputs of the pressure controller by said brake controller,
determining a hose break by using an algorithm being configured to determine a hose break by the brake controller.

The brake pressure sensors may preferably monitor the actual pressure after the control valves. This ensures that the actual pressure lead to the brake cylinder is taken into account.

The detection device preferably comprises an internal pneumatic model, wherein the hose burst detection is preferably conducted by said internal pneumatic model calculating the expected pressure of a healthy pneumatic system. Using such a pneumatic model enables the system to be performed during the regular train operation.

Said internal pneumatic model preferably further receives the control valve commands and calculates the expected cylinder pressure change of a healthy system. In particular, preferably all necessary information is stored in the pneumatic model for different operating conditions.

In case of a hose break of a specific hose connected with a specific brake cylinder where the cylinder pressure of said brake cylinder starts to drop significantly, the pressure controller tries to maintain the requested pressure but needs enormous activation of the control valves and the brake pressure cannot be maintained stable at the requested level. As there will be a significant difference between the expected (modelled) pressure and the measured cylinder pressure, this is signalled as a fault. This fault can be interpreted as a hose burst if the pneumatic model leads to this consequence.

The detection could be implemented as a part of the pressure control software, which is preferably implemented in the ECU.

The advantage of the invention lies in that it can run all the time during operation not needing a specific brake test with a specific detection time needed for the test, or at least with less detection time.

Further, it is possible to detect a hose burst even when the target pressure value is continuously changing.

Further, it is less dependent on the supply power of the valve, in particular of the relay valve.

Even further, it considers the dynamic behavior of the system attached to by using said pneumatic model as outlined above, which increases the probability of detection.

The internal pneumatic model receives the control valve commands and calculates the expected cylinder pressure change of a healthy system.

If there is a breakage of the brake pipe there will be a significant difference between the expected (modelled) pressure and the measured cylinder pressure, which can be signalled as a fault.

The algorithm can be implemented as part of the pressure control software running on the brake controller device to monitor the actual pressure after the control valves (which may preferably also be used for wheel slide protection WSP as well) and would receive the demanded pressure and the valve control outputs of the pressure controller.

In the following, the invention will be exemplarily elucidated by an embodiment taking into account the drawing as attached.

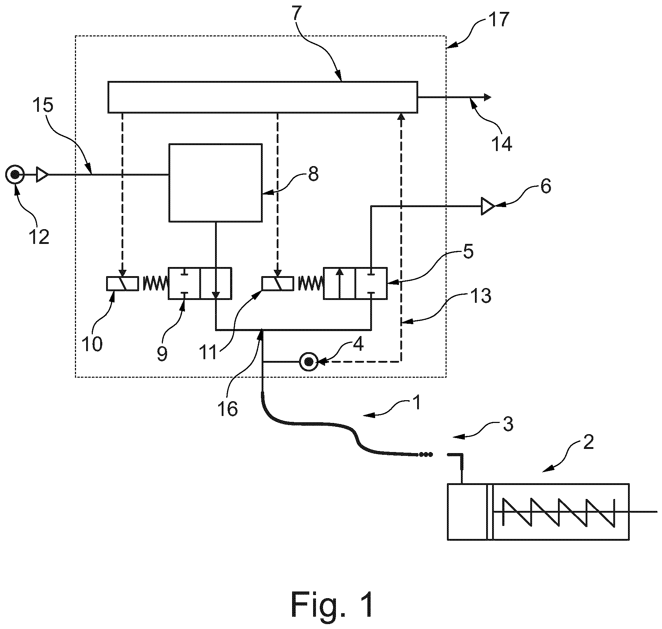

Fig. 1 shows a schematic drawing of a brake control device 17 according to an embodiment of the invention.

In the figure, a brake hose 1 is shown communicating between a relay valve 8 and a brake cylinder 2 of a pneumatic brake containing a spring within the cylinder 2 wherein the brake spring is compressed by the compressed air supplied from a compressed air source 12 so that the brake is applied or released depending on the brake pressure which is delivered through said brake hose.

There is an ECU 7 controlling the brake pressure and providing signals to monitor systems which are not shown here.

Said relay valve 8 provides compressed air from a compressed air source 12 to the brake cylinder 2.

There is an inlet valve 9 and an exhaust valve 5. The inlet valve 9 is disposed between the relay valve 8 and the brake cylinder 2.

From the inlet valve 9 to the exhaust valve 5 is a line connecting both valves. Further, this connecting line comprises a junction 16 branching off another line which leads into the brake hose 1.

The inlet valve 9 is a 2-2 valve and is controlled by a solenoid MV in 10 which receives its signal from the ECU 7 as can be seen by a dotted line. The inlet valve 9 provides one position as shown where the compressed air is led through the inlet valve and leads the air to the brake cylinder 2 or to the exhaust valve 5. The other position of the inlet valve 9 blocks the compressed air so that no pressure is applied to the brake hose or no air is released to the exhaust valve 9.

The exhaust valve 5 is a 2-2 valve and is controlled by a solenoid MV out 11 which receives its signal from the ECU 7 as can be seen by a dotted line. The exhaust valve 5 provides one position as shown where the compressed air is blocked by the valve so that the pressure is led through the junction 16 to the brake cylinder 2 via the brake hose 1. The other position of the exhaust valve 5 releases the compressed air to an exhaust 6 so that no pressure is applied to the brake cylinder 2 via the brake hose 1.

If the brake hose 1 bursts, a cut off 3 occurs and the air contained in the brake cylinder 2 suddenly leaks. As a consequence, the spring which has been compressed within the brake cylinder 2 by the compressed air is released and the brake is released, too.

On the other hand, the pressure from the compressed air supplied from the relay valve 8 suddenly drops.

An internal pressure sensor 4 is provided. Preferably, in this embodiment the internal pressure sensor 4 is disposed downstream of the junction 16 towards the brake hose 1 and the brake cylinder 2. As can be seen by dotted lines, the internal pressure sensor 4 comprises a signal line leading to the ECU 7. If a sudden pressure loss is detected by the internal pressure sensor 4, a corresponding signal is led to the ECU 7.

In the ECU 7 an algorithm is provided.

The present embodiment uses the brake pressure sensors of the brake control device 17 to monitor the actual pressure after the control valves and receives the demanded pressure and the valve control outputs of the pressure controller.

By doing so, the algorithm recognizes a hose break or a cut off 3.

The burst or cut off determination is based on an internal pneumatic model which calculates the expected pressure of a healthy pneumatic system. The internal pneumatic model is stored in the ECU 7 or any other computing unit of a brake system in the train.

The advantage of the invention is that it can run all the time during operation not needing a specific brake test with time even when the target pressure value is continuously changing.

In addition, it is less dependent on the supply power of the relay valve 8 and considers the dynamic behavior of the system as shown by using a model which increases the probability of detection.

In case of hose break the cylinder pressure starts to drop significantly. The pressure controller tries to maintain the requested pressure but it needs enormous activation of the control valves and the brake pressure cannot be maintained stable at the requested level.

If there is a breakage of the brake hose 1 there will be a significant difference between the expected (modelled) pressure and the measured cylinder pressure in the brake cylinder 2.

This finding is passed on to the ECU via the communication line 13. The aforementioned finding is signalled as a fault signal.

The pneumatic model can be formed as a kind of a digital twin to the actual pneumatic systems and is stored in the ECU 7.

### REFERENCE LIST

- 1: brake hose
- 2: brake cylinder
- 3: cut off
- 4: internal pressure sensor
- 5: exhaust valve
- 6: exhaust line
- 7: ECU
- 8: relay valve
- 9: inlet valve
- 10: MV in
- 11: MV out
- 12: compressed air source
- 13: communication line
- 14: diagnostic line
- 15: compressed air input line
- 16: junction
- 17: brake control device

## Claims

1. A detection device for detecting a hose burst or breakage of a brake hose (1) in a pneumatic brake system, preferably in a brake system of a train, comprising: an ECU (7) comprising a brake controller, said detection device further comprising a pressure controller, control valves (5, 8, 9), and a brake pressure sensor (4), said pressure controller being configured to control said control valves for providing a brake pressure for operating a brake cylinder (2), said brake pressure sensor (4) being configured to detect the actual brake pressure lead to the brake cylinder (2), said brake controller being configured to receive the actual brake pressure, the demanded brake pressure, and the control valve outputs of the pressure controller, wherein the brake controller comprises an algorithm configured to determine a hose break.

2. The detection device according to claim 1, wherein one control valve is a relay valve (7).

3. The detection device according to claim 2, wherein an inlet valve (9) and an exhaust valve (5) are provided after the relay valve (8) configured to provide a brake pressure for the brake cylinder (2) or a release pressure for releasing the brake cylinder (2).

4. The detection device according to any of the previous claims, wherein
the brake pressure sensor (4) being configured to monitor the actual pressure after the control valves (5, 8, 9).

5. The detection device according to any of the previous claims, wherein the control valves being also provided for wheel slide protection (WSP).

6. The detection device according to any of the previous claims, wherein the detection device comprises an internal pneumatic model, preferably provided in said ECU (7), wherein the hose burst detection is based on said internal pneumatic model which is configured to calculate the expected pressure of a healthy pneumatic system.

7. The detection device according to the previous claim, wherein said internal pneumatic model is further configured to receive the control valve commands and calculates the expected pressure change of a healthy brake system.

8. The detection device according to any of the previous claims, wherein, in case of a hose break of a specific hose connected with a specific brake cylinder (2) where the cylinder pressure of said brake cylinder starts to drop significantly, and the pressure controller tries to maintain the requested pressure but needs enormous activation of the control valves and the brake pressure cannot be maintained stable at the requested level, there will be a significant difference between the expected (modelled) pressure and the measured cylinder pressure, which can be signalled as a fault, so that the detection device is configured to detect a hose break.

9. Method for detecting a hose burst or breakage of a brake hose in a pneumatic brake system, preferably in a brake system of a train, comprising the following steps:
Monitoring an actual brake pressure by a brake controller comprised in an ECU (7),
Controlling valve control outputs by a pressure controller,
Providing the demanded brake pressure to the control valves (5, 8, 9),
Determining the actual brake pressure by a pressure sensor (4) after said control valves (5, 8 ,9),
Receiving said actual brake pressure after said control valves, the demanded brake pressure, and the control valve outputs of the pressure controller by said brake controller,
determining a hose break by using an algorithm being configured to determine a hose break by the brake controller.

10. Method according to the previous claim, wherein the control valves also conduct a wheel slide protection.

11. Method according to the any of the previous claims 8 and/or 9, wherein the detection device comprises an internal pneumatic model, wherein the hose burst detection is conducted by said internal pneumatic model calculating the expected pressure of a healthy pneumatic system.

12. Method according to the previous claim, wherein said internal pneumatic model further receives the control valve commands and calculates the expected cylinder pressure change of a healthy system.

13. Method according to the any of the previous claims 9 to 12, wherein in case of a hose break of a specific hose connected with a specific brake cylinder (2) where the cylinder pressure of said brake cylinder starts to drop significantly, and the pressure controller tries to maintain the requested pressure but needs enormous activation of the control valves and the brake pressure cannot be maintained stable at the requested level, there will be a significant difference between the expected (modelled) pressure and the measured cylinder pressure, signalling this as a fault, preferably as a hose burst of the brake hose.
